# EUROPEAN PATENT APPLICATION

(11) **EP 4 607 852 A1**
(43) Date of publication of application: **27.08.2025**
(21) Application number: 24305302.2
(22) Date of filing: 23.02.2024
(51) Int. Cl.: H04L 9/40, H04W 84/00, H04W 84/06, H04W 12/03, H04W 12/72

(54) **A STORE AND FORWARD SATELLITE METHOD FOR PROVIDING BY A SERVING SATELLITE A COMMUNICATION SERVICE TO A UE**

(71) Applicant: THALES DIS FRANCE SAS, 92190 Meudon (FR)
(72) Inventor: DANY, Vincent, 13400 AUBAGNE (FR); FINE, Jean yves, 13010 MARSEILLE (FR); PAULIAC, Mireille, 13470 CARNOUX EN PROVENCE (FR); DEMARTY, Joel, 35520 MONTREUIL-LE-GAST (FR)
(74) Representative: Scheer, Luc

(57) **Abstract**

The invention concerns a Store and Forward satellite 22 method for providing by a serving satellite 22 a communication service to a UE 10 which the serving satellite 22 is connected to the ground network intermittently and temporarily via a feeder link or ISL, the UE 10 comprising a secure element and provisioned by a home MNO 11 with PKI key pair and associated UE 10 certificate, the method comprising:
a) sending from the UE 10 to the serving satellite 22 a registration request message comprising the UE 10 certificate, the serving satellite 22 comprising an UDM/AUSF/ARPF or a HSS/AuC 23 of a serving satcom MNO 22;
b) checking at the UDM/AUSF/ARPF or the HSS/AuC 23 the validity of the UE 10 certificate and, if the UE 10 certificate is valid:
c) - sending from the UDM/AUSF/ARPF or HSS/AuC 23 to the UE 10 in a protected way a subscriber identity, a subscriber key associated to the serving satcom MNO, and a certificate of the serving satellite 22;
d) - performing a primary authentication procedure between the UE 10 and the UDM/AUSF/ARPF according to TS 33.501 or the HSS/AuC TS 33.401 with the primary authentication procedure being based on the subscriber key;
e) - sending from the UE 10 to a Store and Forward entity 31 of the satellite 22 user plane data protected in confidentiality and/or integrity by session keys derived during the primary authentication procedure;

f) and, when the serving satellite 22 is connected to the ground network via the feeder link or ISL:
g) - sending from the Store and Forward entity 31 to the core network of the satcom MNO the user plane data;
h) - sending from the core network of the satcom MNO to an application server 40 the user plane data.

## Description

The present invention relates to a method to perform a mutual authentication between a User Equipment (UE) and a 4G or 5G communication serving ground network in a context where the UE registered at a home network is connected via a non-geostationary satellite access in store and forward operation.

The invention addresses the context of 4G and 5G communication systems where a communication User Equipment, designated by the acronym UE in the following, may be in communication with a ground network via a satellite access. In such context, the store and forward operation, S&F in the following, in a 4G/5G system with satellite access is intended to provide some level of communication service for UEs under satellite coverage with intermittent/temporary satellite connectivity.

According to the SA1 requirements, the S&F Satellite operation is providing communication service (in storing and forwarding information) to a UE in periods of time and/or geographical areas in which the serving satellite is not simultaneously connected to the ground network via feeder link or ISL (Intersatellite Link).

Typically, such situation occurs when the satellite is not connected via a feeder link or via intersatellite links ISL to the ground network for delay-tolerant communication service. The support of S&F satellite operation is especially suited for the delivery of delay-tolerant/non-real-time loT satellite services with NGSO satellites (non-Geostationary). It is here noted that, even if 5G communications are specifically addressed, such a store and forward situation already exists in 4G where the invention is also applicable.

An actual 5G authentication flow is as described in the document TS 133.501 §6.1.3.2 (Authentication procedure for 5G AKA).

This flow is however not suitable for a S&F use case because it supposes to be achieved in tens of seconds with continuous connectivity between a UE and the core network of a MNO (Mobile Network Operator). The store and forward use case cannot guarantee such conditions. The support of S&F Satellite operation is especially suited for the delivery of delay-tolerant/non-real-time loT satellite services such as CloT/MTC (IP connectivity, NIDD and SMS).

Further alternative and advantageous solutions would, accordingly, be desirable in the art. To this end, the invention proposes a Store and Forward satellite method for providing by a serving satellite a communication service to a UE which the serving satellite is connected to the ground network intermittently and temporarily via a feeder link or ISL, the UE comprising a secure element and provisioned by a home MNO with PKI key pair and associated UE certificate, the method comprising:
a) sending from the UE to the serving satellite a registration request message comprising the UE certificate, the serving satellite comprising an UDM/AUSF/ARPF or a HSS/AuC of a serving satcom MNO;
b) checking at the UDM/AUSF/ARPF or the HSS/AuC the validity of the UE certificate and, if the UE certificate is valid:
c) - sending from the UDM/AUSF/ARPF or HSS/AuC to the UE in a protected way a subscriber identity, a subscriber key associated to the serving satcom MNO, and a certificate of the serving satellite;
d) - performing a primary authentication procedure between the UE and the UDM/AUSF/ARPF according to TS 33.501 or the HSS/AuC TS 33.401 with the primary authentication procedure being based on the subscriber key;
e) - sending from the UE to a Store and Forward entity of the satellite user plane data protected in confidentiality and/or integrity by session keys derived during the primary authentication procedure;
   and, when the serving satellite is connected to the ground network via the feeder link or ISL:
f) - sending from the Store and Forward entity to the core network of the satcom MNO the user plane data;
g) - sending from the core network of the satcom MNO to an application server the core network the user plane data.

Preferably, between steps f) and g), the core network of the satcom MNO sends the protected user plane data and the certificate to the application server if, after having sent the certificate and information on the user plane data from the satcom MNO to the home MNO:
- the certificate is valid, the core network of the home MNO also informing the core network of the satcom MNO that the certificate is not blacklisted;
- data subscription profile allows commercially such sending of the user plane data.

In contrast, if the certificate is not valid, the home MNO sends a message to the core network of the satcom MNO indicating that the certificate is not valid.

Advantageously, at step c), the subscriber identity and the subscriber key are protected by the satcom MNO either with symmetric keys resulting from Diffie Hellman exchanges between the UE and the satcom MNO, or with ciphering with public of the UE and integrity protection with private key of the satcom MNO.

The subscriber identity and the subscriber key may be ephemeral or permanent.

Steps a) to c) can easily be replaced by EAP-TLS authentication as defined in RFC 9190.

The present invention will be better understood by reading the following description of a preferred implementation of the invention in regard of figures that represent:
- figure 1 a first sequence of steps according to the invention, when a satellite is not connected to a feeder link;
- figure 2 a second sequence of steps according to the invention, when the satellite is connected to a feeder link.

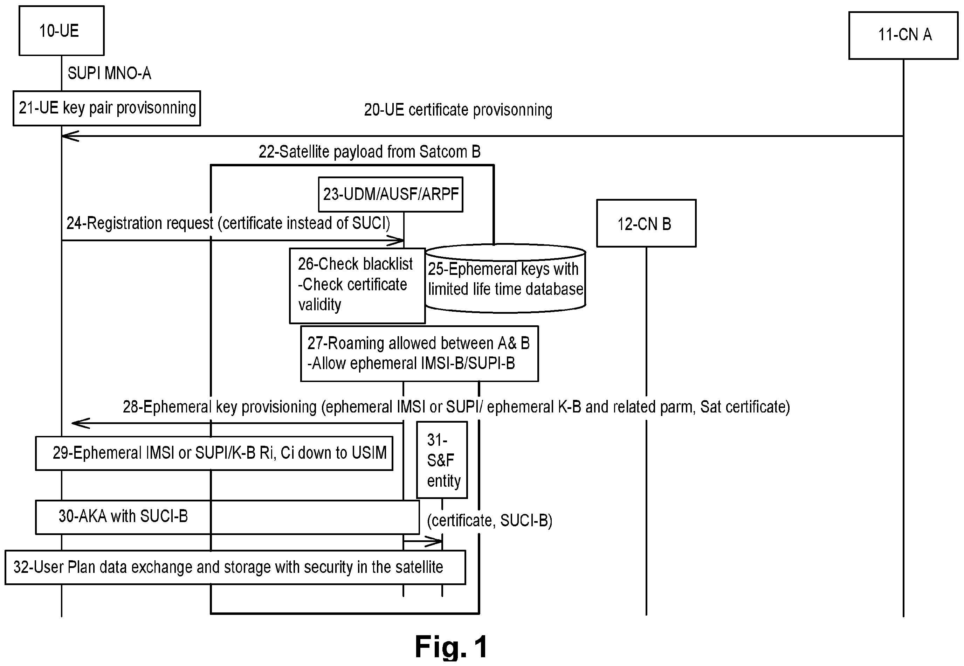

Figure 1 represents a first sequence of steps according to the invention, when a satellite is not connected to a feeder link.

In this figure, four entities are represented: a UE 10, a core network 11 of a MNO A, a core network 12 of a MNO B, and a serving satellite payload 22 (further named serving satellite) of a MNO, also called serving satcom MNO.

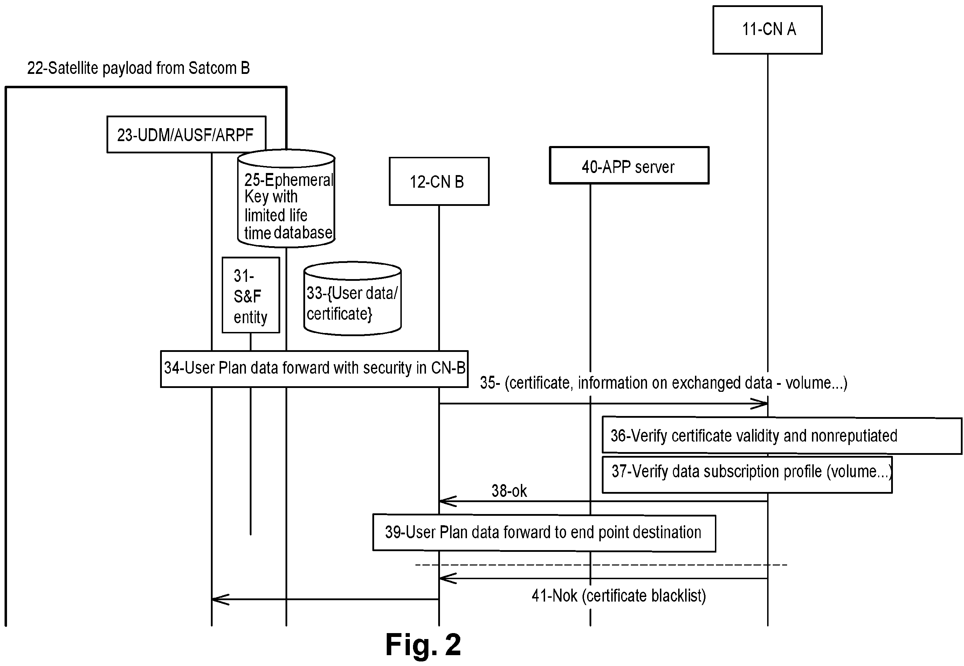

As already said, the serving satellite 22 is here not connected to the ground network via a feeder link or ISL (as it will be the case in figure 2) but it can communicate with the UE 10. The serving satellite 22 is only connected to the ground network intermittently and temporarily via a feeder link or ISL.

The invention proposes to store at the level of the serving satellite 22 an UDM/AUSF/ARPF 23 (for a 5G telecommunication system) or a HSS/AuC (for a 4G telecommunication system). The UE 10 is composed of a telecommunication terminal, like an loT device for example, cooperating with a secure element (a Sim card, a MIM, a UICC, a eUICC or an iUICC for example).

The owner of the UE 10 has a subscription with MNO A (home MNO).

The UE 10 comprises a secure element provisioned by the home MNO (owning the Core Network A) with a PKI key pair and an associated UE certificate.

The secure element also comprises a SUPI provided by MNO A (for a 5G telecommunication system) or an IMSI provided by MNO A (for a 4G telecommunication system).

In a step 20 preceding the workflow of the invention, the UE (or the secure element) is provisioned with a UE certificate by MNO A.

This certificate comprises a public key and is associated in the UE 10 with a private key.

This means that the secure element is pre-provisioned with a PKI key pair (step 21) issued by its home PLMN 11 (plus possibly a satcom master certificate with which it has roaming agreements).

The method of the invention proposes:
- at step 24, the UE 10 sends to the serving satellite 22 a registration request message comprising the UE certificate received at the preliminary step 20. This step comprises sending, instead of its SUCI or IMSI, the certificate received at step 20;
- reference 25 corresponds to a storage database of keys, that can be ephemeral, i.e. having a limited life time;
- at step 26, the UDM/AUSF/ARPF or HSS/AuC 23 checks the validity of the UE certificate. Validity here means checking if this certificate is not blacklisted, since the UDM/AUSF/ARPF or HSS/AuC 23 has not yet established a communication with the CN 11 that has sent this certificate (potentially ephemeral)
- at step 27, optionally, the UDM/AUSF/ARPF or HSS/AuC 23 checks if there is a roaming agreement between the MNOs A and B. This is done if, as it will be explained later on, the UE 10 enters in direct communication with a feeder of MNO A or if it has to establish a communication between MNO B and MNO A;
- At step 28, the UDM/AUSF/ARPF or HSS/AuC 23 sends to the UE 10 in a protected way a subscriber identity (an ephemeral or not ephemeral IMSI or SUPI (referenced IMSI-B, SUPI-B), a subscriber key K-B (an ephemeral or not ephemeral K-B) associated to the serving satcom MNO (depending on the communication at a later stage of the UE 10 to the HPLMN or VPLMN), and a certificate of the serving satellite (Sat certificate);
- At step 29, the UE downloads these information to the secure element with which it cooperates;
- At step 30, a primary authentication procedure between the UE 10 and the UDM/AUSF/ARPF or HSS/AuC 23 can be established (for an UDM/AUSF/ARPF according to TS 33.501 or for an HSS/AuC according to TS 33.401) with this primary authentication procedure being based on the subscriber key K-B. After this authentication procedure, the user plane data exchanged between the UE 10 and the serving satellite 22 are stored in a so-called S&F entity 31 (standing for Store and Forward).
   The user plane data are such protected in confidentiality and/or integrity by session keys derived during the primary authentication procedure (step 32).
- All the UE 10 data are here then collected and stored in the S&F entity 31. The certificate and the SUCI-B are also stored in the S&F entity 31.

Figure 2 represents the second sequence of steps according to the invention, when the satellite is connected to a feeder link or ISL.

Here, the same elements of figure 1 are represented and an application server 40 (APP server) is added. This server 40 has to get the data of the user plan data get from the serving satellite 22 during the steps of figure 1, when the UE 10 was not able to communicate with a terrestrial base station (of MNO A or B - depending of the serving satellite coverage).

Here, the serving satellite is connected to the ground network via a feeder link or ISL.

The user plane data are stored in a repertory 33 along with the certificate of the MNO A.

At step 34, the S&F entity 31 sends to the core network of the satcom MNO the stored user plane data. This satcom MNO can be the HPLMN MNO A or a VPLMN B, depending on the position of the satellite.

At step 39, the core network of the satcom MNO sends to the application server 40 the user plane data.

Optionally, other steps can be performed:
- At step 35, before sending from the S&F entity 31 to the core network of the satcom MNO the user plane data and also before sending from the core network of the satcom MNO to the application server 40 the user plane data, it is possible to send to the home MNO the certificate and information of the user plane data, the volume of data used by the UE 10 (compared with its contracted allowed volume).
- at step 36, the home MNO checks if:
- the certificate is valid (not in a blacklist, not repudiated), the core network of the home MNO informs the core network of the satcom MNO that the certificate is valid;
- data subscription profile (volume of data) allows commercially such sending of the user plane data (step 37).
- at step 38, these information are sent from the home MNO in a message to the core network of the satcom MNO indicating that the certificate is valid.

Otherwise, the if the certificate is not valid, the home MNO sends a message to the core network of the satcom MNO indicating that the certificate is not valid (step 41) and this message is forwarded to the UDM/AUSF/ARPF or HSS/AuC 23 in order to update its database for accepting or not a future connection of the UE 10.

An option of the invention is that at step 28 of figure 1, the subscriber identity and the subscriber key are protected by the satcom MNO either with symmetric keys resulting from Diffie Hellman exchanges between the UE and the satcom MNO, or with ciphering with public of the UE and integrity protection with private key of the satcom MNO.

The subscriber identity and the subscriber key may be ephemeral or permanent. The advantage to be ephemeral is that the HPLMN MNO can decide when a UE cannot access anymore to its network.

The steps 24 to 28 of above description in regard of figure 1 can also be performed through other processes, like for example EAP-TLS authentication as defined in RFC 9190.

## Claims

1. A Store and Forward satellite (22) method for providing by a serving satellite (22) a communication service to a UE (10) which said serving satellite (22) is connected to the ground network intermittently and temporarily via a feeder link or ISL, said UE (10) comprising a secure element and provisioned by a home MNO (11) with PKI key pair and associated UE (10) certificate, said method comprising:
a) sending from said UE (10) to said serving satellite (22) a registration request message comprising said UE (10) certificate, said serving satellite (22) comprising an UDM/AUSF/ARPF or a HSS/AuC (23) of a serving satcom MNO (22);
b) checking at said UDM/AUSF/ARPF or said HSS/AuC (23) the validity of said UE (10) certificate and, if said UE (10) certificate is valid:
c) - sending from said UDM/AUSF/ARPF or HSS/AuC (23) to said UE (10) in a protected way a subscriber identity, a subscriber key associated to said serving satcom MNO, and a certificate of said serving satellite (22);
d) - performing a primary authentication procedure between said UE (10) and said UDM/AUSF/ARPF according to TS 33.501 or said HSS/AuC TS 33.401 with said primary authentication procedure being based on said subscriber key;
e) - sending from said UE (10) to a Store and Forward entity (31) of said satellite (22) user plane data protected in confidentiality and/or integrity by session keys derived during said primary authentication procedure;
f) and, when said serving satellite (22) is connected to said ground network via said feeder link or ISL:
g) - sending from said Store and Forward entity (31) to the core network of said satcom MNO said user plane data;
h) - sending from said core network of said satcom MNO to an application server (40) said user plane data.

2. A method according to claim 1 wherein, between steps f) and g), said core network of said satcom MNO sends said protected user plane data and said certificate to said application server if, after having sent said certificate and information on said user plane data from said satcom MNO to said home MNO (11):
- said certificate is valid, said core network of said home MNO (11) also informing said core network of said satcom MNO that said certificate is not blacklisted;
- data subscription profile allows commercially such sending of said user plane data.

3. A method according to claim 1 or 2 wherein, if said certificate is not valid, said home MNO (11) sends a message to the core network of said satcom MNO indicating that said certificate is not valid.

4. A method according to any of the claims 1 to 3 wherein at step c), said subscriber identity and said subscriber key are protected by the satcom MNO either with symmetric keys resulting from Diffie Hellman exchanges between said UE (10) and said satcom MNO, or with ciphering with public of said UE (10) and integrity protection with private key of said satcom MNO.

5. A method according to any of the claims 1 to 4 wherein said subscriber identity and said subscriber key may be ephemeral or permanent.

6. A method according to any of the claims 1 to 5 wherein steps a) to c) are replaced by EAP-TLS authentication as defined in RFC 9190.
